(19) Europäisches Patentamt
European Patent Office
Office européen des brevets

(11) EP 0 959 341 B1

(12) EUROPÄISCHE PATENTSCHRIFT

(45) Veröffentlichungstag und Bekanntmachung des Hinweises auf die Patenterteilung:
**29.01.2003 Patentblatt 2003/05**

(51) Int Cl.[7]: **G01N 21/25**, G01N 21/72, G01N 21/35

(21) Anmeldenummer: **99109435.0**

(22) Anmeldetag: **11.05.1999**

(54) **Verfahren zur quantitativen Analyse von Gasvolumina, insbesondere von Abgasen aus Verbrennungseinrichtungen oder -anlagen, sowie Einrichtungen zur Durchführung der Verfahren**

Method for the quantitative analysis of volumina of gases, especially exhaust gases from combustion apparatus, and device for implementing the method

Méthode d'analyse quantitative de volume de gaz, notamment d'un dispositif de combustion, et dispositif pour sa mise en oeuvre

(84) Benannte Vertragsstaaten:
**DE FR GB**

(30) Priorität: **16.05.1998 DE 19821956**

(43) Veröffentlichungstag der Anmeldung:
**24.11.1999 Patentblatt 1999/47**

(73) Patentinhaber: **Deutsches Zentrum für Luft- und Raumfahrt e.V.**
**53175 Bonn (DE)**

(72) Erfinder:
- **Lindermeir, Erwin, Dr.**
  **80333 München (DE)**
- **Haschberger, Peter, Dr.**
  **82131 Gauting (DE)**
- **Schimpf, Birger**
  **82205 Gilching (DE)**
- **Schreier, Franz, Dr.**
  **82152 Planegg (DE)**
- **Tank, Volker, Dr.**
  **82279 Eching (DE)**

(74) Vertreter: **von Kirschbaum, Albrecht, Dipl.-Ing.**
**Patentanwalt**
**Postfach 1520**
**82102 Germering (DE)**

(56) Entgegenhaltungen:
**WO-A-91/18280** **US-A- 4 790 652**
**US-A- 5 551 780**

- **PATENT ABSTRACTS OF JAPAN vol. 096, no. 005, 31. Mai 1996 (1996-05-31) & JP 08 005547 A (KANSAI ELECTRIC POWER CO INC:THE;OTHERS: 01), 12. Januar 1996 (1996-01-12)**
- **JIA QU ZHANG ET AL: "Determination of the temperature profile of axisymmetric combustion-gas flow from infrared spectral measurements" COMBUSTION AND FLAME, AUG. 1986, USA, Bd. 65, Nr. 2, Seiten 163-176, XP002112811 ISSN: 0010-2180**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 959 341 B1

## Beschreibung

Die Erfindung betrifft ein Verfahren zur quantitativen Analyse von Gasvolumina, insbesondere von Abgasen aus Verbrennungseinrichtungen, wie Flugzeugtriebwerken (Gasturbinen), mittels Emissions- oder Absorptionsspektrometrie im ultravioletten, sichtbaren und infraroten Spektralbereich. Ferner betrifft die Erfindung eine Einrichtung zur Durchführung des Verfahrens.

Aus JP 08005547 A ist zur Messung von Gaskonzentrationen aus einer Anzahl von in bestimmten Abständen parallel zueinander verlaufenden Lichtwegen eine erste Lichtweggruppe gebildet. Ferner wird eine Anzahl weiterer Lichtweggruppen gebildet, die bezüglich der zuerst erhaltenen Lichtweggruppe um vorgegebenen Winkel verschoben sind. Die Gaskonzentrationen werden entlang der Lichtwege der unter unterschiedlichen Winkeln erhaltenen Lichtweggruppen in mindestens drei Richtungen ermittelt und werden mittels eines CT-Algorithmus arithmetisch verarbeitet, woraus dann die Gaskonzentrationsverteilung berechnet wird.

In WO 91/18280 sind ein Verfahren und eine Einrichtung offenbart, um die Geschwindigkeitsverteilung strömender Flüssigkeiten mit zwei oder mehr ungleichförmig gemischten Komponenten und deren relatives Verhältnis zu bestimmen. Hierzu sind in der Einrichtung eine Anzahl Empfangseinrichtungen in einer zur Längsachse eines Abgasstrahls senkrechten Ebene angeordnet.

In US-A 5 551 780 ist ein Verfahren zum Bestimmen charakteristischer Merkmale von Prozessen beschrieben, bei welchen Radikale erzeugt werden. Hierbei wird die Temperatur und/oder die Konzentration von Radikalen mit Hilfe von Detektoren in Zonen gemessen, die wiederum von mindestens zwei Detektoren überwacht werden.

In einem Artikel von JIa QU ZHANG et al. in Combustion and Flame, Aug.1986, USA, Bd.65, Nr.2, S.163 bis 176, XP-002112811 ISSN:0010-2118 ist das Bestimmen des Temperaturprofils eines achssymmetrischen Verbrennungsgasstroms aus spektralen Infrarotmessungen beschrieben.

In heutiger Zeit bestimmen u.a. zwei wesentliche Forderungen die Eigenschaften industrieller Verbrennungsanlagen, zu denen im vorliegenden Fall auch Flugzeug-Turbinen und ähnliche Verbrennungseinrichtungen gerechnet werden: die Maximierung des energetischen Wirkungsgrads der Verbrennung (ökonomische Forderung), und die Minimierung unerwünschter Bestandteile im Abgas (ökologische Forderung). ökologische Aspekte bestimmen u.a. auch das Interesse an der quantitativen Zusammensetzung der bei natürlichen Bränden entstehenden Abgase. Da Verbrennungsprozesse in aller Regel nicht räumlich homogen ablaufen und Inhomogenitäten Wirkungsgrad und Abgaszusammensetzung beeinflussen, ist eine räumlich aufgelöste Analyse der Verbrennung und der Abgase erwünscht.

Analysen finden gegenwärtig operationell über eine Probennahme statt. Dabei kommen sowohl statische Sammelverfahren, wie Entnahme von Einzelproben beispielsweise mittels evakuierter Sammelgefäße, als auch dynamische Sammelverfahren, wie kontinuierliche Probenentnahmen beispielsweise mittels Absaugeinrichtungen, zum Einsatz. Eine kontinuierliche, räumlich aufgelöste Abgasanalyse bei den meist großen Abgasströmen der betrachteten Systeme ist mit diesen Verfahren nicht oder nur mit sehr großem technischen und/oder zeitlichen Aufwand möglich.

Ferner ist a priori nicht sichergestellt, daß sich die Probe in der Zeit zwischen Entnahme und Analyse, beispielsweise wegen Temperaturänderungen und/oder chemischen Reaktionen nicht verändert. Die Analyse erfordert in der Regel unterschiedliche Verfahren für unterschiedliche Abgasbestandteile und ist häufig zeitaufwendig. Die Sonden zur Probennahme können unerwünschte Rückwirkungen auf den Verbrennungsprozeß haben, bis zur Gefährdung des Betriebs der Anlage, beispielsweise bei Brennkammern oder Triebwerken von Düsenturbinen.

In neuerer Zeit wird im Rahmen von Forschungsprojekten experimentell die Eignung von berührungslosen infrarotspektrometrischen Verfahren zur Abgasanalyse untersucht. Mit diesen optischen Verfahren werden zwar mehrere Abgasbestandteile gleichzeitig erfaßt, jedoch integral über das Volumen, das vom Strahlenbündel der Optik des Geräts überdeckt wird. Daher erlauben sie keine räumliche Auflösung, wie sie gerade bei der Untersuchung von Abgasen aus in der Entwicklung befindlichen Gasturbinen erforderlich ist, sondern nur eine eindimensionale Erfassung der Abgase.

Als nachteilig wird bei gegenwärtig eingesetzten Verfahren zur Abgasanalyse angesehen:

1.Probennehmende Verfahren sind langsam, benötigen für jede Abgaskomponente ein eigenes Analysengerät, beinhalten die Gefahr der Probenverfälschung, erfordern bei hoher räumlicher Auflösung einen großen technischen und/oder zeitlichen Aufwand und wirken möglicherweise auf den Verbrennungsprozeß zurück.

2.Berührungslose infrarot-spektrometrische Verfahren ermöglichen nur eine eindimensionale Erfassung der Abgase und ergeben die Konzentrationen der Abgaskomponenten im Volumen des überdeckten Strahlenbündels nur als Mittelwert. Gerade bei der Entwicklung von Brennkammern und Turbinen von Düsentriebwerken ist aber die Kenntnis der räumlich aufgelösten Verteilung von Temperatur und Konzentration der Abgasbestandteile notwendig, um Aussagen über den Wirkungsgrad und die Emissionsindizes (Abgasmenge bezogen auf verbrannte Treibstoffmenge) machen zu können. Aus der Kenntnis der räumlichen Verteilung können auch Eigenschaften der und damit Entwicklungskriterien für die Brennkammer abgeleitet werden.

3.Die für die genaue quantitative Bestimmung von Abgasmengen aus industriellen oder natürlichen Verbrennungsprozessen notwendige räumliche Auflösung der Messung ist nicht möglich (berührungslos) oder aus Gründen des erforderlichen Aufwands nicht vetretbar.

Wesentliche Elemente der Auswertung sind eine Modellierung der von einem Detektor empfangenen Infrarot-Strahlung durch Lösung der Strahlungstransportgleichung und eine Anpassung an die gemessenen Spektren durch Ausgleichsverfahren.

Bei einer Modellierung des Strahlungstransports (Vorwärtsmodell) ergibt sich die von einem Detektor an einem Ort s empfangene Strahldichte $I(\nu,s)$ aus der (integralen Form der) Strahlungstransportgleichung:

$$I(\nu,s) = I(\nu,s_0)\tau(\nu;s,s_0) + \int_{s0}^{s} ds'\ B(\nu,T(s'))\ \frac{\partial T(\nu,s,s')}{\partial s'} \qquad (1)$$

Dabei ist mit $s'$ der Abstand vom Beobachter auf der Sichtlinie (siehe Fig.1), mit $B$ die Planck-Funktion bei der Temperatur $T$, und mit $I(\nu,s_o)$ ein Quellterm bezeichnet. Die monochromatische Transmission $T(\nu)$ beschreibt die Dämpfung der Strahlung zwischen zwei Orten $S_0$ und $s_1$ und ist definiert durch:

$$\mathrm{T}(\nu;s_0,s_1) = \exp(-\int_{s_0}^{s_1} k(\nu,s')\ n(s')\ ds'), \qquad (2)$$

wobei $k(\nu;s) = k(\nu,p(s),T(s))$ der druck- und temperaturabhängige Absorptionskoeffizient und $n(s)$ die molekulare Teilchendichte sind. In inhomogenen Medien sind diese Größen ortsabhängig. Die Integration in den Gl.'n(1) und (2) über den Weg wird in den gängigen Strahlungstransportmodellen durch die sogenannte Curtis-Godson-Näherung vorgenommen, wobei das inhomogene Medium durch eine Reihe von homogenen Schichten mit konstanter Temperatur und Molekül-Konzentrationen, beispielsweise den Mittelwerten innerhalb dieser Schichten, ersetzt wird und über diese Schichten summiert wird.

Im allgemeinen Fall mit mehreren absorbierenden Molekülen ist $k(\nu;s')n(s')$ durch eine Summe über alle Spezies $\Sigma_g k_g(\nu;s')n_g(s')$ zu verallgemeinern. Die von einem Spektrometer empfangene Strahlung ist bekanntlich durch Faltung des monochromatischen Spektrums (G1. (1) bzw. (2)) mit der instrumentellen Linienprofilfunktion zu berechnen.

Nachteilig bei dieser in den gängigen Auswerteverfahren verwendeten Modellbeschreibung des gemessenen Spektrums ist, daß die endliche Apertur und der endlichen Blickwinkel (Field of view FOV) realer Spektrometer nicht berücksichtigt wird. Zudem sollte die "üblicherweise" für Strahlungstransportberechnungen verwendete Curtis-Godson Näherung hier nicht verwendet werden, da die Least-Squares Verfahren, wie unten näher ausgeführt, im allgemeinen wesentlich mehr Iterationsschritte benötigen als bei Lösung der Integrale mit Standardquadraturverfahren.

Die Gl.'n (1) und (2) sind (im allgemeinen nicht lineare) Integralgleichungen der allgemeinen Form $g(\nu) = \int Y[\nu,f(s)]\ ds$, die zur Inversion, d.h. zur Bestimmung der unbekannten "Quellfunktion" $f$, beispielsweise des Temperatur- oder Gaskonzentrationsprofils, durch Linearisierung, die auf eine Fredholm'sche Integralgleichung erster Art, $g(\nu) = \int K(v,s)f(s)ds)$ führt, und Diskretisierung in ein lineares Gleichungssystem übergeführt werden. In der Regel ist ein Spektrum nur für eine endliche Zahl von diskreten Spektralelementen $\nu_i$, $i = 1,...,m$, bekannt. In den gängigen Auswerteverfahren werden die unbekannten Temperatur- und/oder Gaskonzentrationsprofile nur durch ihre Mittelwerte beschrieben, d.h. es werden konstante Profile innerhalb des Abgasstrahls angenommen, beispielsweise ein Einschichtmodell des Gasvolumens, oder ein Dreischichtmodell bei Berücksichtigung von Vorder- und Hintergrund.

Falls die Zahl der Meßpunkte m größer ist als die Zahl n der Unbekannten, liefert die Diskretisierung der Strahlungstransportgleichung (1) oder G1. (2) ein überbestimmtes Gleichungssystem. Der übliche Ansatz ist also eine Lösung durch Minimalisierung,

$$\min_{\mathbf{x}} \|\mathbf{g} - \mathbf{y}(\mathbf{x})\|^2 = \min_{\mathbf{x}} \sum_{i=1}^{m} (g_i - y(\nu_i,\mathbf{x}))^2 . \qquad (3)$$

Dabei ist $g = (g_l, ,g_m) = (g(\nu_1),...,g(\nu_m))$ das gemessene (Transmissions- oder Emissions-) Spektrum und der $m$-Vektor y beschreibt das modellierte Spektrum, das im allgemeinen in einem nichtlinearen funktionalen Zusammenhang mit den unbekannten Mittelwerten für Temperatur- und Gaskonzentrationen (hier repräsentiert durch den n-Vektor

x) sowie der Wellenzahl z nach Gl.(1) oder (2))steht.

G1.(3) ist ein nichtlineares Least-Squares Problem für den unbekannten n-dimensionalen Vektor x, das durch Iteration, wie Gauß-Newton- oder Levenberg-Marquardt-Verfahren, gelöst wird.

Ein Nachteil des hier dargestellten gängigen Verfahrens ist die stark vereinfachte Darstellung des unbekannten Temperatur- und/oder Konzentrations- Profils im Gasvolumen. Zudem muß die Ausdehnung der Schicht als bekannt vorausgesetzt werden.

Aufgabe der Erfindung ist es daher ein Verfahren zur quantitativen Analyse von Gasvolumina, insbesondere von Abgasen aus Verbrennungseinrichtungen zu schaffen, bei welchem berührungslos gemessen wird, sowie viele Abgaskomponenten und deren Temperatur gleichzeitig erfasst und deren räumliche Verteilung ermittelt werden kann. Ferner soll eine Einrichtungzur Durchführung des Verfahrens angegeben werden.

Gemäß der Erfindung ist dies bei einem Verfahren nach dem Oberbegriff des Anspruchs 1 durch die Verfahrensschritte in dessen kennzeichnendem Teil gelöst. Vorteilhafte Weiterbildungen sind den Ansprüchen 3 bis 7 zu entnehmen. Ferner ist eine Einrichtung zur Durchführung des Verfahrens Gegenstand des Anspruchs 2.

Bei den erfindungsgemäßen Verfahren zur quantitativen Abgasanalyse wird ein dreidimensionales, computergestütztes Modell der Abgaserscheinung, nämlich des Abgasstrahls einer Brennkammer, Gasturbine oder Rakete, einer Abgassäule in einem Schornstein, einer Abgasfahne aus einem Vulkan oder Schornstein, usw. verwendet. Ferner wird zur Durchführung der Abgasanalyseverfahren gemäß der Erfindung eine spektrometrische Meßeinrichtung eingesetzt, mittels welcher die ultraviolette, sichtbare oder infrarote Strahlung am Abgas aus verschiedenen Richtungen erfaßt wird. Darüber hinaus wird gemäß der Erfindung ein Auswerteverfahren in Form eines (zwei-, drei- oder) multidimensionalen Inversionsverfahrens eingesetzt.

Bei gemäß der Erfindung vorgesehenen Abgasanalysatoren wird als Meßgerät ein Spektrometer verwendet, welches vorzugsweise im infraroten Spektralbereich arbeitet, aber je nach Aufgabenstellung auch für den ultravioletten oder sichtbaren Spektralbereich ausgelegt werden kann. Hierbei wird das Spektrometer in bekannter Weise als Emissionsspektrometer betrieben, d.h. in vollkommen passiver Weise; das bedeutet, es empfängt die von den Abgasen emittierte Strahlung, die in der Regel Infrarotstrahlung sein wird, bzw. die bei hohen Abgastemperaturen beispielsweise von Raketentriebwerken auch sichtbare und ultraviolette Strahlung sein kann.

Oder das Spektrometer wird in bekannter Weise als Absorptionsspektrometer, d.h. es wird in aktiver Anordnung in Verbindung mit einer Strahlungsquelle betrieben, wobei sich zwischen Strahlungsquelle und Spektrometer das Meßvolumen mit dem Abgas befindet, das von der Strahlung durchlaufen wird, die Strahlung dabei teilweise absorbiert und vom Spektrometer empfangen wird.

In einer Absorptionsanordnung werden breitbandige Strahlungsquellen im ultravioletten, sichtbaren und vorzugsweise infraroten Spektralbereich, beispielsweise Schwarze Strahler oder auch Globar-Strahler verwendet, die auf die strahlungsaktiven Spektralbereiche der zu untersuchenden Gase abgestimmt sind. Es werden jedoch auch schmalbandige Strahlquellen, wie beispielsweise Laser und Laserdioden verwendet. Es können alle bekannten Typen von Spektrometern eingesetzt werden, die jedoch für die Verwendung in rauher Umgebung geeignet sein müssen, wie beispielsweise auf Triebwerksprüfständen.

Besonders geeignet sind Fourier-Spektrometer nach dem Michelson-Aufbau, vor allem wenn sie robust ausgelegt sind, wie beispielsweise MIROR Michelson Interferometer mit rotierendem Retroreflektor, o.ä.. Das Michelson-Interferometer kombiniert große spektrale Bandbreiten mit hohem spektralen Nachweisvermögen (eine kleine rauschäquivalente Strahldichte NESR).

Die erforderliche Größe des Spektrometers sollte im allgemein der natürlichen Linienbreite der zu betrachtenden Gase entsprechen, die bei Umgebungsdruck an der Erdoberfläche ca. 0,1$cm^{-1}$ oder besser ist; sie wird im Detail jedoch an die spezifischen Gegebenheiten im betrachteten Spektralbereich angepaßt. Beispielsweise kann es erforderlich sein, eine höhere spektrale Auflösung zu realisieren, wenn nämlich die Linien verschiedener vorhandener Gase nahe beieinander liegen und getrennt werden müssen, um Wechselwirkungen zu reduzieren oder zu vermeiden. Auch kann eine geringere spektrale Auflösung ausreichen, wenn die Linien eines Gases weit auseinander liegen und nicht von denen anderer Gase gestört sind.

Besondere Bedeutung findet das erfindungsgemäße Verfahren bei Verbrennungsprozessen oder thermischen Reaktionen, bei denen Abgase freigesetzt werden, sowohl in industriellen Prozessen, als auch in der Natur (Vulkane, Waldbrände u.ä.). Es können Abgase beliebiger fester, flüssiger oder gasförmiger Brennstoffe mit dem erfindungsgemäßen Verfahren untersucht werden. Die Abgas-Analyse betrifft die Detektion, Klassifizierung und Quantifizierung der im beobachteten Volumen enthaltenen Gase, sowie unverbrannter Brennstoffanteile, wie beispielsweise Kohlenwasserstoffe und feste Partikel wie beispielsweise Ruß, sowie die Bestimmung der Temperatur der Gase und sonstigen Bestandteile.

Wenn nachfolgend vorwiegend der Begriff Abgase verwendet wird, so sollen damit auch alle anderen Gase ausdrücklich eingeschlossen sein, obwohl die Untersuchung von Abgasen als die z.Zt. wichtigste Anwendung gesehen wird.

Gemäß der Erfindung ist bei einer Einrichtung zur Durchführung des Verfahrens die optische Längsachse in

Bezug auf den Abgasstrahl geometrisch definiert und reproduzierbar zu verstellen, so daß damit Beobachtungsebenen durch das Abgas zu definieren sind. Diese sind dadurch gegeben, daß mittels der Einrichtung in einer ersten Meßreihe eine Anzahl *m* spektraler Messungen durchgeführt werden, wobei die optische Achse des Spektrometers immer in der Beobachtungsebene liegt, jedoch von einer Messung zur nächsten um eine Strecke $s_x$ parallel versetzt wird. In einer zweiten Meßreihe werden *n* Messungen durchgeführt, wobei die optische Achse wiederum in der Beobachtungsebene liegt, diesmal aber senkrecht zum Achsenverlauf beim ersten Verfahrensschritt. Hierbei wird die optische Achse von Messung zu Messung um eine Strecke $s_y$ parallel versetzt.

Die Parameter $m, n, s_x, s_y$ hängen von der Geometrie des Abgasvolumens und der Größe des Gesichtsfelds des Spektrometers ab, es können in speziellen Fällen $m = n$ und $s_x = s_y$ sein. Die Abstände $s_x$ und $s_y$ werden so gewählt, daß sie gleich dem Durchmesser des Spektrometer-Gesichtsfeldes am Meßort sind; dann haben die parallelen Sichtbündel keinen Abstand voneinander, sie können aber auch kleiner sein, wobei sich dann die parallelen Sichtbündel überlappen, oder auch größer, wobei dann die parallelen Sichtbündel Abstände voneinander haben. Es entsteht so ein Satz von $(m + n)$ Messungen.

Je nach eingesetztem Verfahren ergibt jede Messung die spektralen Transmission $T(\nu)$, wobei ν[cm-l] die Wellenzahl, d.h. die inverse Wellenlänge der Strahlung ist, bzw. die spektrale Strahldichte $I(\nu)$, die über das gesamte Gasvolumen im Strahlenbündel des Gesichtsfelds des Spektrometers integriert ist.

Durch die Anordnung der optischen Achse in der Beobachtungsebene entstehen bei den Messungen zwei orthogonale Sichtbündelsätze, die ein Gitter mit $(m \cdot n)$ Schnittvolumina bilden. Die Größe dieser Volumina ist durch die Geometrie der Anordnung gegeben, wie Raumwinkel des Spektrometers, Entfernung zum Schnittvolumen. Jedes Schnittvolumen wird dabei aus zwei zueinander orthogonalen Richtungen spektrometrisch erfaßt.

Die integrale Messung über jedes der *m* Sichtbündel der ersten Meßreihe enthält *n* Volumina, die bei der orthogonalen zweiten Meßreihe jeweils einem Volumen in jedem deren *n* Strahlenbündel entspricht. Das gilt ebenso umgekehrt: Die integrale Messung über jedes der *n* Sichtbündel der zweiten Meßreihe enthält *m* Volumina, die bei der orthogonalen ersten Meßreihe jeweils einem Volumen in jedem deren *m* Strahlenbündel entspricht. Der Aufbau der Meßanordnung erlaubt es, analog zur beschriebenen Vorgehensweise weitere Beobachtungsebenen durch das Abgas zu legen und in gleicher Weise durch spektrale Messung weitere Datensätze zu gewinnen. Dadurch wird das Abgas meßtechnisch in den drei Raumdimensionen erfaßt.

Die erfindungsgemäßen (zwei-, drei- oder) multidimensionalen Auswerteverfahren zur Analyse von Abgasen verwenden sowohl das eingangs beschriebene Modell der Abgaserscheinung als auch die durch die Messung erhaltenen Datensätze. Es hat zum Ziel, mittels einer Inversionsrechnung die Meßdaten und ihre analytische Beschreibung (Ergebnis der Modellrechnung) in Übereinstimmung zu bringen, wobei sich die gesuchten Parameter (Gaskonzentrationen, Temperatur, eventuell Druck) ergeben. Dazu bilden die Auswerteverfahren eine räumliche Matrix von Gasvolumina, deren geometrische Dimensionen (Ausdehnung und Anordnung im Raum) durch die Geometrie der Messungen und das Spektrometer-Gesichtsfeld bestimmt sind.

In der sogenannten Vorwärtsrechnung werden mittels des Modells für jedes Gasvolumen die spektrale Strahldichte oder der spektrale Absorptionsgrad berechnet, wozu für die Gaskonzentrationen und die Temperaturen, eventuell auch den Druck, Schätzwerte angenommen werden, und unter Einbeziehung der Strahlungstransfereigenschaften eines jeden Gasvolumens im Sichtbündel zum Modellwert für jedes Sichtbündel zusammengefaßt. In der Inversionsrechnung des Auswerteverfahrens werden die modellierten Meßwerte mit den wahren Meßwerten verglichen und die Schätzwerte der zu bestimmenden Parameter (Gaskonzentrationen, Temperaturen, Druck) bis zu einer durch ein Abbruchkriterium definierten optimalen Übereinstimmung iterativ verbessert.

Die so gefundenen Parameter stellen einen Mittelwert für jedes Volumenelement dar, wodurch die gewünschte, räumlich aufgelöste Analyse erreicht ist. Diese wird möglich durch die orthogonale (oder geometrisch anders strukturierte) Meßstrategie und das (zwei-, drei- oder) multidimensionale Auswerteverfahren. Dabei ist insbesondere vorteilhaft, daß in dem Auswerteverfahren jedes betrachtete Meßvolumen in zweifacher (orthogonaler), oder vielfacher (multidimensionaler) Meßbeobachtung verarbeitet wird.

Eine zusätzliche Verknüpfung bzw. Parametrisierung der Meßvolumina einer zwei-, drei- oder multidimensionalen Messung im Auswerteverfahren wird möglich bei gerichteten und strukturierten Abgasströmen. Solche liegen innerhalb von Schornsteinen sowie bei Düsentriebwerken und Gasturbinen in der Nähe des Düsenaustritts vor. Sowohl quer zum Gasstrom als auch in Strömungsrichtung liegen hier analytisch beschreibbare Abhängigkeiten der Gaskonzentrationen und Temperaturen untereinander vor, die beim Auswerteverfahren genutzt werden können. Derartige Abgasverhältnisse sind für das Analyseverfahren besonders gut geeignet.

Anhand der Darstellung einer bevorzugten Ausführungsform werden weiter unten Hinweise für die Dimensionierung eines Spektrometers für die Abgasanalyse gegeben.

Nachfolgend wird die Erfindung anhand von bevorzugten Ausführungsformen unter Bezugnahme auf die anliegenden Zeichnungen im einzelnen erläutert. Es zeigen:

Fig.1 schematisch die Geometrie der Strahlungstransportrechnung durch ein Medium;

Fig.2 eine schematische Darstellung einer erfindungsgemäßen spektrometrischen Meßanordnung am Abgasstrahl eines Flugzeugtriebwerks im Prüfstand und eine mehrdimensionale Strahlungserfassung;

Fig.3 schematisch die Geometrie des Strahlungstransports bei endlichem Blickwinkel (FOV) des Spektrometers;

Fig.4 schematisch die Geometrie des Strahlungstransports bei endlichem Blickwinkel und Aperturöffnung des Spektrometers;

Fig.5 ein radiales Profil für Temperatur- und Teilchendichten der Moleküle;

Fig.6 eine schematische Darstellung einer Abtastung eines zylindersymmetrischen Mediums, und

Fig.7 schematisch eine Abtastung eines allgemein geformten Mediums.

Eine Meßanordnung in Fig. 2 zeigt ein Spektrometer 21 in einer bestimmten Entfernung von einem Meßobjekt, in Fig.2 von einem Abgasstrahl 22 eines Flugzeugtriebwerks 23. Der Abgasstrahl 22 ist konzentrisch von einer in Fig. 2 nur schematisch angedeuteten Halterung 24 umgeben, welche in nicht näher dargestellter Weise so montiert ist, daß sie parallel zu sich selbst und konzentrisch zur Längsachse 210 des Abgasstrahls 22 verschiebbar ist.

An der Halterung 24 ist eine Anzahl von ($m + n$) optischen Empfangseinrichtungen 25 montiert, welche nicht näher dargestellte, bekannte Linsen- oder Spiegelsysteme sind. An die ($m + n$) Empfangseinrichtungen 25 ist je ein Lichtleitfaserbündel 26 gekoppelt, welches an seinem anderen Ende zu je einem Eingang eines optischen Multiplexers 27 führt. Der optische Multiplexer 27 ist mit seinem optischen Ausgang an den optischen Eingang 28 des Spektrometers 21 gekoppelt.

Als Lichtleitfaserbündel werden beispielsweise bekannte Quarzfaserbündel im sichtbaren und nahen infraroten Spektralbereich, oder Schwermetallfluorid-Gläser im Bereich 3 µm bis 5 µm sowie andere für diese und andere Spektralbereiche verfügbare Gläser verwendet. Das optische System aus Empfangseinrichtungen 25, Lichtleitfaserbündeln 26, Multiplexer 27 und Spektrometer 21 ist so dimensioniert, daß die Empfangseinrichtungen 25 einen Gesichtsfeldwinkel geringer Divergenz (einzelne mrad bis einige Grad) aufweisen. In Abhängigkeit von der geometrischen Ausdehnung des Meßobjekts ist der Gesichtsfeldwinkel so dimensioniert, daß Strahlung aus möglichst parallelen (d. h. mit geringer Divergenz) sich nicht oder nur wenig überlappenden Strahlenbündeln 211 empfangen wird, wie beispielhaft in Fig.2 dargestellt ist.

Hierbei sind die ($m + n$) Empfangseinrichtungen 25 in der Halterung 24 in einer senkrecht zur Längsachse 210 des Abgasstrahls 22 liegenden Ebene so angeordnet und zueinander justiert, daß jeweils parallel zueinander orientierte optische Achsen der von den m Empfangseinrichtungen 25 aufgenommenen Strahlenbündel 211 senkrecht zu ebenfalls parallel zueinander ausgerichteten Achsen der von den $n$ Empfangseinrichtungen 25 aufgenommenen Strahlenbündel ausgerichtet sind. Somit spannen die optischen Achsen der ($m + n$) *Empfangseinrich*tungen 25 ein aus rechtwinklig zueinander verlaufenden Strahlenbündeln gebildetes Gitter senkrecht zur Achse 211 des Abgasstrahles 22 auf. In Fig.2 ist zur Vereinfachung der Darstellung $m = n = 4$ gewählt.

Im Meßbetrieb (bei laufendem Triebwerk) emittieren die heißen Abgase des Triebwerks Infrarotstrahlung, die von den ($m + n$) Empfangseinrichtungen 25 erfaßt, und über die Lichtleitfaserbündel 26 an den Multiplexer 27 geleitet wird. Hierbei erfaßt jede Empfangseinrichtung 25 nur Strahlung aus dem ihr zugeordneten Strahlbündel 211. Der Multiplexer 27 leitet die Strahlung aus allen Faserbündeln sequentiell an das Spektrometer 28 weiter, wo das zugehörige Spektrum bestimmt wird, d.h. es werden ($m + n$) Spektren zu jeder Meßposition entlang der Längsachse des Abgasstrahls 22 bestimmt.

Diese Rohspektren werden in kalibrierte Spektren der Strahldichte bzw. des Absorptionsgrads übergeführt. Diese Spektren enthalten spektrale Information aus dem gesamten ihnen jeweils zugeordneten Strahl- oder Sichtbündel 211. Dabei stehen die Informationen der einzelnen Bündel untereinander über das oben genannte Gitter zueinander in Beziehung. Jedem der ($m + n$) Strahlenbündel ist ein Gasvolumen zugeordnet, dessen Strahlung einmal über dieses Bündel insgesamt integriert, erfaßt und außerdem in m Teilvolumina entlang der Bündelachse aufgeteilt wird und aus jedem dieser $m$ Teilvolumina einen Strahlungs(teil)beitrag zu jedem der $m$ orthogonalen Strahlenbündeln liefert, und umgekehrt. Diese Verknüpfung der Strahlungsinformation wird in dem anschließend beschriebenen Auswerteverfahren so benutzt, wie nachfolgend im einzelnen ausgeführt ist.

In einer nicht näher dargestellten Ausführungsform die bilden Sichtlinien von Sendern und Empfängern zueinander parallele Meßstrecken, die senkrecht auf der Längsachse des Abgasstrahls 210 liegen.

Die vorstehend beschriebene Anordnung zur Messung in einem Triebwerk (einer Gasturbine) ist für den Betrieb zur Absorptionsmessung vorgesehen. In einer anderen bevorzugten Betriebsweise wird sie auch als Emissionsmeß-Anordnung betrieben. Dazu werden die Sender abgeschaltet oder entfernt. Die Empfänger empfangen dann die Strahlung der Gasschichten im Bypass und im Heißgas.

In beiden Betriebsweisen werden Messungen bei ausgeschaltetem Triebwerk (Gasturbine) als Referenzmessungen und bei eingeschaltetem als Betriebsmessungen vorgenommen. Die Verarbeitung von Referenz- und Betriebsmessung erfolgt in bekannter Weise. Erfindungsgemäß sind Modellierung und Auswertung an die vorstehend beschriebenen Meßanordnungen gemäß der Erfindung angepaßt.

Die Modellierung ermöglicht die Berechnung der Strahlungseigenschaften (spektrale Strahldichte, Strahlungstransfer, spektraler Emissions- bzw. Absorptionsgrad) der Abgasbestandteile in Abhängigkeit von deren räumlicher Dichteverteilung und Temperatur in jeder Volumeneinheit oder Volumenzelle des Abgases, sowie den Strahlungstransfer durch alle Gasvolumina bis zu einem Spektrometer. Es modelliert dabei auch nicht zum Abgas gehörende Gasschichten in der Sichtlinie des Spektrometers (Vordergrund, Hintergrund). Die im Abgas enthaltenen festen und gasförmigen Komponenten werden zweckmäßig in bekannter Weise aus dem verwendeten Brennstoff und dem Verbrennungsprozeß abgeleitet.

Für die Berechnung der Strahlungseigenschaften der Abgaskomponenten werden die bekannten molekülspektrometrischen Parameter der interessierenden Gase verwendet: Linienposition, Linienstärke, Linienbreite, u.a. Diese Parameter sind in computerlesbaren Datenbanken wie HITRAN u.ä. gespeichert. Für den Fall, daß Gase zu untersuchen sind, deren molekülspektrometrische Parameter noch nicht bekannt sind, müssen diese in bekannter Weise in Labormessungen bestimmt werden und können dann in dem Verfahren verwendet werden. Das Modell wird sowohl zur Abschätzung der Strahlungseigenschaften beliebiger Abgasgemische, als auch im erfindungsgemäßen Auswerteverfahren verwendet, wie später gezeigt wird.

Bei der erfindungsgemäßen Modellierung der beobachteten Strahlung werden die Einflüsse des Spektrometers berücksichtigt. Aufgrund des endlichen Öffnungswinkels der Spektrometeroptik (FOV, in Fig. 3) sieht dieses nicht nur eine einzige Sichtlinie, sondern ein Strahlenbündel endlicher Ausdehnung. Diese Überlagerung mehrerer Sichtlinien wird durch ein Faltungsintegral gemäß

$$I(\nu,s) = \int_{FOV} I(\nu,s,\alpha)\mathrm{FOV}(\alpha)\,d\alpha \tag{4}$$

beschrieben, wobei $I(\nu, s, \alpha)$ die unter dem Winkel $\alpha$ einfallende Strahlung ist und die Winkelabhängigkeit durch die Funktion $\mathrm{FOV}(\alpha)$ beschrieben wird, die üblicherweise eine Boxfunktion ist. Die Integration in Gl.(4) erfolgt durch ein geeignetes Gauß-Quadratur-Verfahren, wie das Gauß-Legendre-Quadratur-Verfahren mit mindestens drei Sichtlinien. Wegen der endlichen Empfangsapertur des Spektrometers sind zudem nicht nur ein Strahlenbündel, sondern mehrere parallel versetzte Bündel entsprechend Fig.4 zu berücksichtigen, was in analoger Weise durch Integration über die Apertur behandelt wird. (Bei Absorptionsmessungen ist die Modellierung der Transmission (Gl.2) in analoger Weise zu modifizieren.)

Zur Vermeidung der mit der Curtis-Godson-Näherung verbundenen Nachteile erfolgt die Integration in den Gln.(1) und (2) gemäß der Erfindung durch Standard-Quadraturverfahren, beispielsweise Newton-Cotes Formeln.

Bei den erfindungsgemäßen Auswertung werden einerseits mehrere Spektren gleichzeitig ausgewertet und andererseits die Modellierung der unbekannten Profile verbessert. Bei dem erfindungsgemäßen Meßverfahren werden mehrere Spektren gemessen, die im Sinne eines "Global Fit" in einem Least-Squares Verfahren ausgewertet werden. Hierzu werden die den Einzelspektren entsprechenden Meßvektoren $g_S$ für $s = 1, ..., S$ zu einem Gesamtvektor $G = (g_l,...,g_S)$ konkateniert und die Minimalisierungsbedingung wird auf diesen Vektor angewandt:

$$\min_x \|\mathbf{G} - \mathbf{Y}(\mathbf{x})\|^2 = \min_x \sum_{s=1}^{S} \sum_{i=1}^{m} (g_{s,i} - y_s(\nu_i, \mathbf{x}))^2 . \tag{5}$$

(Der Vektor x bezeichnet die zu bestimmenden unbekannten Parameter. Der Einfachheit halber wurden hier Spektren gleicher Länge vorausgesetzt.)

In den derzeit gebräuchlichen Auswerteverfahren wird der inhomogene Abgasstrahl durch eine homogene Schicht konstanter Bedingungen angenähert und es werden charakteristische Größen dieses Einschichtmodells, z.B. die mittlere Temperatur, CO, $CO_2$, oder NO Konzentration bestimmt. Bestandteil der Erfindung ist die Bestimmung der räumlichen Verteilung dieser Größen. Für die Diskretisierung der unbekannten Quellfunktion werden erfindungsgemäß drei Methoden verwendet, die in den nächsten Abschnitten näher erläutert werden:

- Parametrisierung der Quellfunktion durch einen "einfachen" analytischen Ausdruck;

- Diskretisierung durch Entwicklung nach einem Funktionensystem;
- Diskretisierung durch Quadraturverfahren.

Das erfindungsgemäße Verfahren zur Bestimmung von Konzentrations- und Temperaturprofilen aus den gemessenen Strahldichtespektren wird in den Fällen vereinfacht, in denen zusätzliche Informationen über die Profile vorhanden sind. So treten in der Praxis Fälle auf, in denen aufgrund der Kenntnis der chemischen-/physikalischen Vorgänge bei der Ausbreitung der Abgase bekannt ist, daß die sich ergebenden Profile durch eine bestimmte Klasse von Funktionen beschrieben werden können.

Die Vorgehensweise in solchen Fällen wird nachstehend anhand des Beispiels von Flugzeugstrahltriebwerken erläutert. Bei diesen Triebwerken wird das Abgas mit hoher Geschwindigkeit emittiert. Eine Durchmischung mit Umgebungsluft findet daher erst allmählich statt. Der Ausbreitungsvorgang in den ersten Metern hinter der Düse ist deswegen in erster Linie vom Zustand des Gases beim Austritt abhängig und läßt sich mit Hilfe von Gleichungen beschreiben. Es existieren Simulationsprogramme, mit denen Temperatur- und Konzentrationsprofile basierend auf der Kenntnis der Bedingungen in der Austrittsebene vorhergesagt werden können.

Triebwerke können in Klassen eingeteilt werden, die sich durch die Form der Temperatur- und Konzentrationsprofile unterscheiden, welche in den ersten Metern hinter der Düse auftreten. Diese Tatsache ist bekannt. Für zivile Triebwerke ergeben sich beispielsweise radiale Profile, wie sie in Fig. 5 dargestellt sind. Wie der Darstellung des radialen Profils in Fig.5 zu entnehmen ist, sind in der Mitte (um r=0) die Bedingungen konstant. Dieser Bereich verkleinert sich mit zunehmendem Abstand von der Düse bis er ganz verschwindet. Hierbei fallen weiter nach außen hin die Größen entsprechend einer Gauß-Funktion ab.

Die radialen Profile lassen sich formelmäßig mit Hilfe von Gl.(6) beschreiben:

$$f(r) = \begin{cases} f_{\max} & \text{für } |r| < r_c \\ (f_{\max} - f_{\text{umg}}) \exp\left(-\frac{(|r| - r_c)^2}{r_h^2}\right) + f_{\text{umg}} & \text{für } |r| \geq r_c \end{cases} \qquad (6)$$

Dabei ist mit *f* die Abgastemperatur bzw. die Anzahldichte der Gase (Anzahl der Moleküle pro Volumeneinheit) bezeichnet. Die Indizes 'max' und 'umg' kennzeichnen die Maximalwerte bzw. die Umgebungsbedingungen. r ist die Radiuskoordinate, wobei r = 0 im Zentrum der Düse liegt. $r_c$ ist der Radius, bis zu dem die Gaseigenschaften konstant sind. Für Radien r > $r_c$ fällt das Profil gaußförmig mit dem Halbwertsradius $r_h$ auf Umgebungsbedingungen ab.

Die Parameter $r_c$ und $r_h$ sind Funktionen des Abstandes von der Düse. Mit zunehmender Entfernung wird $r_c$ kleiner und strebt gegen null. Gleichzeitig nimmt die Halbwertsbreite ($r_h$) zu. Im allgemeinen sind die Geometrieparameter ($r_c$ und $r_h$) außerdem von der Größe *f* abhängig. Somit können sich die konkreten Profile je nach betrachteter Spezies unterscheiden. Oft jedoch kann ein gemeinsames Profil zumindest näherungsweise angenommen werden.

Die gemessenen Strahldichtespektren werden dazu benutzt, die Parameter der funktionellen Zusammenhänge von G1. (6) zu bestimmen. Dies geschieht vorzugsweise simultan für alle Messungen mit Hilfe der Gaußschen Ausgleichsrechnung (least squares fit).

Zunächst werden die zu bestimmenden Parameter zu einem Vektor zusammengefaßt. Wird beispielsweise vereinfachend angenommen, daß die Umgebungsbedingungen bekannt sind und alle Profile gleiche Geometrieparameter aufweisen, dann ergibt sich

$$x = [r_c, r_h, T_{\max}, c_{1,\max}, c_{2,\max}, \ldots, c_{N,\max}] \qquad (7)$$

wobei $T_{max}$ für die maximale Temperatur und $c_{i,max}$ für die maximale Anzahldichte des Gases *i* steht. Der Vektor x wird nun mit Hilfe bekannter numerischer Algorithmen (Ausgleichsverfahren) bestimmt.

Im letzten Abschnitt wurde die funktionale Ortsabhängigkeit der Temperatur- und Gaskonzentrationsprofile explizit vorausgesetzt und die unbekannten Profile wurden durch einfache Funktionen parameterisiert. Für Gasvolumina weitgehend unbekannter Struktur wird diese Einschränkung fallengelassen und die unbekannten Profile werden allgemeiner nach einem geeignet zu wählenden Satz von Funktionen entwickelt.

Im eindimensionalen Fall einer Zylindersymmetrie wird das unbekannte Profil in radialabhängige Funktionen entwickelt:

$$f(r) = \sum_{j=1}^{n} x_j \Phi_j(r) . \qquad (8)$$

Dabei ist $f(r)$ das zu bestimmende (Temperatur- oder Gas-) Profil in Abhängigkeit vom Abstand zur Symmetrieachse, $\Phi_j$ ist ein geeignet zu wählender Satz von Funktionen, z.B. lineare Splines, "hat-functions", oder die Eigenfunktionen des harmonischen Oszillators ($\Phi_0(r) \sim \exp(-r^2)$, $\Phi_1(r) \sim r \exp(-r^2)$...), und $x_j$,j = 1,...,$n$ sind die $n$ unbekannten Entwicklungskoeffizienten, die im Least-Squares Sinne entsprechend Gl.(3) oder (5) bestimmt werden. Im allgemeinen Fall mehrerer zu bestimmender Profile wird jedes dieser Profile entwickelt und der im Least-Squares-Verfahren zu bestimmende Vektor x ist durch die Konkatenierung der Entwicklungskoeffizienten aller Profile gegeben.

Dieser Entwicklungs-Ansatz wird auch für Fälle benutzt, in denen nur ein Spektrum entsprechend einer Sichtlinie gemessen wurde; die Radialkoordinate ist dementsprechend durch die Koordinate entlang der Sichtlinie zu ersetzen.

Im zwei- (oder drei-) dimensionalen Fall wird in Verallgemeinerung der eindimensionalen Entwicklung Gl. (8) wird die unbekannte Profilfunktion als Summe

$$f(\vec{r}) = \sum_{j=1}^{n} x_j \Phi_j(\vec{r}) \qquad (9)$$

dargestellt, wobei die n Entwicklungskoeffizienten $x_1$,..., $x_n$ wiederum durch Minimalisierung der Residuennorm (G1. (3) bzw. (5)) bestimmt werden. Die von den beiden Raumkoordinaten des Ortsvektors $\vec{r}=(x,y)$ abhängigen Funktionen werden z.B. als Produktfunktionen $\Phi(x,y) = \Phi(x)\ \Phi(y)$ gewählt, also

$$f(x,y) = \sum_{k,l} x_{kl}\, \phi_k(x)\, \phi_l(y) \qquad (10)$$

Der dreidimensionale Fall ist analog.

Numerische Quadraturverfahren beruhen auf der Ersetzung eines Integrals $\int_a^b \phi(s)ds$ durch eine Summe $\Sigma_{i=1}^{N} \omega_i \phi(s_i)$, wobei die Gewichte $\omega_i$ und Knoten $s_i$ vom Integrationsintervall und vom gewählten numerischen Verfahren abhängen. Wird eine numerische Integration n-ter Ordnung betrachtet, so werden die Wegintegrale in Gl.(1) bzw. (2) genähert durch

$$g(\nu_i) = \sum_{j=1}^{n} w_j\, K(\nu_i; s_j)\, f(s_j) \qquad \text{für} \quad i = 1,2,\ldots,m . \qquad (11)$$

und mit $g_i = g(v_i)$, $A_{ij} \equiv \omega_j K(v_i, s_j)$ und $x_j \equiv f(s_j)$ wird eine Matrixgleichung erhalten:

$$g_i = \sum_{j=1}^{n} A_{ij} x_j \qquad \text{oder} \qquad \mathbf{g} = \mathbf{A}\mathbf{x} . \qquad (12)$$

so daß nun die Werte der unbekannten Profilfunktion $x_j \equiv f(s_j)$ die mit Hilfe der Least-Squares Methode (3) bzw. (5) zu bestimmenden $n$ unbekannten Parameter sind.

Wenn zur Bestimmung von Konzentrations- und Temperaturprofilen aus Emissionsspektren eines zylindersymmetrischen Mediums angenommen werden kann, daß das zu untersuchende Medium radialsymmetrisch ist, wie im Falle des Abgasstrahls, so wird erfindungsgemäß durch radiales Abtasten gemäß Fig. 6 Information über den Profilverlauf gewonnen.

Zur Auswertung wird eine schmale Scheibe senkrecht zur Symmetrieachse des Mediums (Ausbreitungsrichtung des Abgasstrahls) betrachtet und in *r* Kreisringe eingeteilt. Dabei wird angenommen, daß innerhalb eines entsprechend dünnen Ringes die Temperaturen und Konzentrationen konstant sind. Aus dem gemessenen Spektrum $g_1$, dessen Sichtlinie durch den äußersten Ring verläuft, werden dann die entsprechenden Zustandsparameter $x_1$ des Mediums in diesem Ring mit Hilfe eines Least-Squares-Verfahrens bestimmt,

$$\min_{\mathbf{x}_1} \|\mathbf{g}_1 - \mathbf{y}_1(\mathbf{x}_1)\|^2, \qquad (13)$$

wobei $y_1(x_1)$ das entsprechende Modell für die Beschreibung des Strahlungstransports durch den Ring ist und von den Parameter $x_1$ abhängt. Mit diesen nun als bekannt anzusehenden Parametern $x_1$ werden anschließend aus dem Spektrum $g_2$, dessen Sichtlinie durch den äußersten und den nächsten inneren Ring verläuft, ebenfalls mit einem Least-Squares-Verfahren die Parameter $x_2$ dieses Ringes bestimmt. Dieses Verfahren wird nun sukzessiv auf jeden weiteren inneren Ring bis zur Symmetrieachse des Mediums angewendet,

$$\min_{\mathbf{x}_s} \|\mathbf{g}_s - \mathbf{y}_s(\mathbf{x}_1, \mathbf{x}_2, \ldots, \mathbf{x}_{j-1}, \mathbf{x}_j)\|^2 \qquad \text{für} \quad j = 1, \ldots, r. \qquad (14)$$

Auf diese Weise werden alle Konzentrationen und Temperaturen in Abhängigkeit des Abstandes zur Symmetrieachse des Mediums bestimmt. Diese sequentielle Auswertung läßt sich einfach implementieren und ermöglicht eine rekursive Bestimmung der Schichten.

Alternativ werden im Sinne des vorstehend erläuterten Global Fit Verfahrens die einzelnen Spektren zu einem Gesamtmeßvektor $G=(g_1^T, g_2^T, \ldots g_r^T)^T$ kombiniert und die Gesamtheit aller zu bestimmenden Parameter (Vektor $x=(x_1^T, x_2^T, \ldots x_r^T)^T$)simultan gefittet.

Wenn zur Bestimmung von Konzentrations- und Temperaturprofilen aus Emissionsspektren eines beliebig geformten Mediums keine Zylindersymmetrie des zu untersuchenden Mediums angenommen werden kann, wird das Medium aus mindestens zwei Richtungen beobachtet, um räumliche Informationen über den Verlauf von Konzentrations- und Temperaturprofilen zu erhalten. Fig.7 zeigt eine einfache Anordnung zur Untersuchung des Mediums, bei der zwei senkrecht zueinander angeordnete Beobachtungsrichtungen betrachtet werden. Hierbei ist wiederum ein Schnitt durch das Medium gezeigt.

Das Raster in Fig.7 beschreibt eine Einteilung des Mediums in Bereiche. Die Numerierung der Bereiche ist willkürlich. Zu jedem Bereich mit der Nummer i gehört ein Satz von Parametern $x_i$, die bestimmt werden sollen. Jeder dieser Bereiche wird in diesem Beispiel aus zwei senkrecht zueinander stehenden Richtungen beobachtet, d.h. zu jedem Bereich gehören zwei Spektren $g_k$ und $g_l$, in denen Informationen über die Parameter $x_i$ enthalten seien. Werden in einer Richtung *m* und in der anderen Richtung *n* Spektren gemessen, wobei in Fig.7 $m = n = 7$ ist, so werden $S_f = m \times n$ Bereiche und insgesamt $S_g = m + n$ Spektren erhalten.

Durch Aneinanderhängen der Parametervektoren $x_i$ zu einem Gesamtvektor $X = (x_1^T, x_2^T, \ldots x_{s_f}^T)^T$ und der Spektren $g_k$ zu einem Gesamtmeßvektor $G=(g_1^T, g=_2^T, \ldots g_{s_g}^T)^T$ gelangt man wieder zu der Formulierung eines Least-Squares-Problems wie in Gl. (5).

Wird die Ortsauflösung durch dichteres Abtasten und/oder die Zahl der Unbekannten (z.B. durch eine höhere Zahl von Entwicklungskoeffizienten in G1.(8) bzw. (9) oder mehr Quadraturpunkte in G1.(11)) erhöht, so werden die beschriebenen Least-Squares-Probleme schlechter konditioniert. Dies ist einerseits durch die zunehmende Uberlappung der Sichtstrahlen des Spektrometers bedingt, da Spektren benachbarter Sichtlinien immer ähnlicher werden und damit tendenziell immer weniger neue Information enthalten. Andererseits steigt im Fall eines allgemein geformten Mediums die Zahl der gesuchten Parameter quadratisch mit der Zahl der gemessenen Spektren an.

Um trotz einer schlechten Konditionierung den maximalen Informationsgehalt und damit eine höhere Ortsauflösung aus den gemessenen Spektren zu erhalten, werden sogenannte Regularisierungverfahren anwendet, bei denen man zusätzliche Informationen über den Verlauf der Profile in das Least-Squares Problem einbringt. Solche zusätzlichen Informationen werden durch die Forderung von Glättebedingungen an die Profile oder durch die Forderung der Monotonie der Profile in bestimmten Bereichen eingebracht.

Bei der Regularisierung nach Phillips und Tikhonov wird eine Glättebedingung in Form einer quadratischen Nebenbedingung in das Least-Squares-Problem (G1. (3) bzw. (5)) eingeführt

$$\min_{\mathbf{x}}\left(\|\mathbf{G}-\mathbf{Y}(\mathbf{x})\|^2+\lambda^2\|L(\mathbf{x}-\mathbf{x}_0)\|^2\right) \qquad (15)$$

wobei *L* eine Einheitsmatrix oder eine Matrix ist, die der diskreten Darstellung von Ortsableitungsoperatoren entspricht, $x_o$ eine a priori Annahme über die gesuchten Profile ist, und λ der sogenannte Regularisierungsparameter ist, der das Gewicht der quadratischen Nebenbedingung bestimmt. Somit wird nicht nur der Abstand zwischen Messung und Modell, sondern auch beispielsweise die Norm (der Ableitung) der Profile minimiert. Dies entspricht anschaulich der Forderung der Glattheit des Profils. Ist ein a priori Verlauf der gesuchten Profile nicht bekannt, so wird $x_0 = 0$ gesetzt.

Da das Model Y(x) im allgemeinen nicht linear ist, wird Gl.(15) durch Linearisierung im Sinne eines Gauß-Newton-Verfahrens iterativ gelöst. Für die Wahl des Regularisierungsparameters λ existieren eine Reihe von Verfahren wie GCV, discrepancy principle, oder L-Kurven-Verfahren.

Bei dem erfindungsgemäßen Verfahren zur quantitativen Analyse von insbesondere inhomogenen Gasvolumina werden Spektrometer im infraroten, sichtbaren oder ultravioletten Spektralbereich verwendet, die eine Einrichtung haben, mit der die Strahlung des betrachteten Gasvolumens aus verschiedenen, zueinander in definierter Orientierung stehenden Richtungen, (beispielsweise auch senkrecht zueinander) empfangen wird. Es wird eine Anzahl Spektren gemessenen, die unterschiedlich sind, aber über die Meßgeometrie miteinander verknüpft sind.

Bei dem erfindungsgemäßen Verfahren wird diese Verknüpfung durch Modellierung derselben bei der Auswertung genutzt. Das Modell enthält auch die analytische Beschreibung einer Strahlungsübertragung der Szene. Mit Hilfe der Auswertung werden die gesuchten Gasparameter, wie räumliche Verteilung der Konzentrationen und Temperaturen, durch verknüpften Vergleich der gemessenen mit den Modellspektren und Minimierung der Quadrate ihrer Differenzen ermittelt.

<u>Bezugszeichenliste</u>

| | |
|---|---|
| 21 | Spektrometer |
| 22 | Abgasstrahl |
| 23 | Flugzeugtriebwerk |
| 24 | Halterung |
| 25 | Empfangseinrichtungen |
| 26 | Lichtleitfaserbündel |
| 27 | Multiplexer |
| 28 | optischer Eingang v. 21 |
| 29 | optische Achsen |
| 210 | Längsachse |
| 211 | Strahlbündel |

## Patentansprüche

1. Verfahren zur quantitativen Analyse von Gasvolumina, insbesondere von Abgasen aus Verbrennungseinrichtungen, wie Flugzeugtriebwerken (Gasturbinen), mittels Emissions- oder Absorptionsspektrometrie im ultravioletten, sichtbaren und infraroten Spektralbereich, bei welchem Verfahren

   a) eine geometrisch definierte und reproduzierbar verstellbare Beobachtungsebene festgelegt wird, die jeweils senkrecht zur Längsachse eines Abgasstrahls eines Triebwerks ausgerichtet ist und in sich entlang der Längsachse des Abgasstrahls verschiebbar ist;
   b) in einer ersten Meßreihe eine Anzahl m spektraler Messungen durchgeführt werden, wobei die optische Achse eines Spektrometers immer in der jeweiligen Beobachtungsebene liegt, jedoch von einer Messung zur nächsten jeweils um eine erste Strecke parallel versetzt wird, und
   c) in einer zweiten Meßreihe n Messungen durchgeführt werden, wobei die diesmal senkrecht zur Achse im Schritt b) ausgerichtete optische Achse wiederum in der Beobachtungsebene liegt, und von Messung zu Messung jeweils um eine zweite Strecke parallel versetzt wird, wobei

d) durch das Anordnen der optischen Achse in der Beobachtungsebene bei den *(m + n)* Messungen zwei orthogonale Strahlenbündelsätze entstehen, die ein Gitter mit *(m x n)* Schnittvolumina bilden, deren Größe durch die Geometrie (Raumwinkel des Spektrometers, Entfernung zum Schnittvolumen) gegeben ist, und wobei

e) mit Hilfe des Satzes von *(m + n)* Messungen je nach eingesetztem Verfahren jede Messung die spektrale Transmission $T(\nu)$, wobei $\nu[cm^{-1}]$ die Wellenzahl (inverse Wellenlänge der Strahlung) ist, bzw. die spektrale Strahldichte $I(\nu)$ ergibt, die über das gesamte Gasvolumen im Strahlenbündel des Gesichtsfelds des Spektrometers integriert ist.

**2.** Einrichtung zur Durchführung des Verfahrens nach Anspruch 1, insbesondere zum Messen von Abgasen im Abgasstrahl von Flugzeugtriebwerken (Gasturbinen), mit einer Anzahl von *(m + n)* optischen Empfangseinrichtungen (25), welche in einer senkrecht zur Längsachse (210) des Abgasstrahls (22) liegenden Ebene so angeordnet und zueinander justiert sind, dass jeweils parallel zueinander orientierte optische Achsen der von den *m* Empfangseinrichtungen (25) aufgenommenen Strahlen senkrecht zu ebenfalls parallel zueinander ausgerichteten Achsen der von den *n* Empfangseinrichtungen (25) aufgenommenen Strahlen ausgerichtet sind, so dass aus den rechtwinklig zueinander verlaufenden Strahlen ein senkrecht zur Achse (211) des Abgasstrahles (22) aufgespanntes Gitter gebildet ist,
**gekennzeichnet durch**
eine den Abgasstrahl (22) umgebende, in der senkrecht zur Längsachse (210) des Abgasstrahls (22) liegenden Ebene angeordnete Halterung (24), die parallel zu sich selbst entlang der Längsachse (210) des Abgasstrahls (22) verschiebbar ist; eine der Anzahl *(m + n)* optischen Einrichtungen (25) entsprechende Anzahl von Lichtleitfaserbündeln (26), die mit einem Ende an den Empfangseinrichtungen (25) angekoppelt sind; einen optischen Multiplexer (27), zu dessen Eingängen jeweils das andere Ende der Lichtleitfaserbündel geführt ist, und ein Spektrometer (21), an das der optische Multiplexer (27) angekoppelt ist.

**3.** Verfahren nach Anspruch 1, bei welchem der endliche Öffnungswinkel einer Spektrometeroptik (FOV) durch ein Strahlenbündel endlicher Ausdehnung als Überlagerung mehrerer Sichtlinien in Form eines Faltungsintegrals berücksichtigt wird, und
die Integration durch das Gauß-Legendre-Quadratur-Verfahren mit mindestens drei Sichtlinien erfolgt, wobei die endliche Empfangsapertur des Spektrometers durch mehrere parallel versetzte Strahlenbündel in Form einer analogen Integration über die Apertur berücksichtigt wird.

**4.** Verfahren nach Anspruch 1, **dadurch gekennzeichnet, dass** mindestens ein Spektrum gemessen wird und in einem Least-Squares-Verfahren Temperatur und/oder die räumliche Dichteverteilung der Abgasbestandteile bestimmt werden.

**5.** Verfahren nach Anspruch 1, **dadurch gekennzeichnet, dass** mehrere Spektren gemessen und gleichzeitig im Sinne eines "Global Fit" in einem Least-Squares Verfahren ausgewertet werden, indem die den Einzelspektren entsprechenden Meßvektoren $g_s$ für $s = 1, ..., S$ zu einem Gesamtvektor $G = (g_l, .. ., g_s)$ konkateniert werden und die Minimalisierungsbedingung auf diesen Vektor angewendet wird.

**6.** Verfahren nach Anspruch 4 oder 5, **dadurch gekennzeichnet, daß** zur Verbesserung einer Modellierung von unbekannten Profilen eine Parametrisierung der Quellfunktion durch einen analytischen Ausdruck vorgenommen wird, und
in Fällen, in denen zusätzliche Informationen über die Profile vorhanden sind und diese sich analytisch beschreiben lassen, mittels der gemessenen Strahldichtespektren die Parameter der funktionellen Zusammenhänge simultan für alle Messungen mit Hilfe der Gaußschen Ausgleichsrechnung (least squares fit) bestimmt werden, indem die zu bestimmenden Parameter zu einem Vektor zusammengefaßt werden, und der Vektor mit Hilfe numerischer Algorithmen (Ausgleichsverfahren) bestimmt wird.

**7.** Verfahren nach einem der Ansprüche 1 oder 4 bis 6, **dadurch gekennzeichnet, daß** zur Verbesserung einer Modellierung für Gasvolumina weitgehend unbekannter Struktur eine Diskretisierung durch Entwicklung eines geeignet zu wählenden Satzes von Funktionen durchgeführt wird, indem im eindimensionalen Fall der Zylindersymmetrie das unbekannte Profil in radialabhängige Funktionen entwickelt wird

$$f(r) = \sum_{j=1}^{n} x_j \Phi_j(r) .$$

und im zwei- oder drei- dimensionalen Fall die unbekannte Profilfunktion als Summe

$$f(\vec{r}) = \sum_{j=1}^{n} x_j \Phi_j(\vec{r})$$

dargestellt wird,
wobei mit *f(r)* das zu bestimmende Temperatur- oder Gas- Profil, $\Phi_j$ ein geeignet zu wählender Satz von Funktionen ist, (lineare Splines, "hat-functions", oder die Eigenfunktionen des harmonischen Oszillators ($\Phi_0$(r) ~ exp(-$r^2$), $\Phi_1$(r)~r exp(-$r^2$) ..) ist, und $x_j$ (mit j = 1,..., *n*) die *n* unbekannten Entwicklungskoeffizienten sind, die mittels eines Least-Squares-Verfahrens bestimmt werden,
und wobei im zwei- oder drei- dimensionalen Fall die von den beiden Raumkoordinaten des Ortsvektors $\vec{r}$= *(x,y)* abhängigen Funktionen als Produktfunktionen Φ*(x,y)* = Φ*(x)*Φ*(y)* gewählt werden, so daß gilt:

$$f(x,y) = \sum_{k,l} x_{kl} \phi_k(x) \phi_l(y) .$$

**8.** Verfahren nach einem der Ansprüche 1, 6 oder 7, **dadurch gekennzeichnet, daß** für Gasvolumina weitgehend unbekannter Struktur unbekannte Profile nach einem geeignet zu wählenden Satz von Funktionen entwickelt werden, im allgemeinen Fall mehrerer zu bestimmender Profile jedes dieser Profile entwickelt wird, und der im Least-Squares-Verfahren zu bestimmende Vektor *x* durch die Konkatenierung der Entwicklungskoeffizienten aller Profile bestimmt wird.

**9.** Verfahren nach Anspruch 1, **dadurch gekennzeichnet, daß** in Fällen, in denen keine Informationen über Profile vorliegen, das Medium aus mindestens zwei Richtungen in einer Ebene beobachtet wird, wobei die Strahlenbündel jeweils in ein und derselben Ebene liegen, um räumliche Informationen über den Verlauf von Konzentrations- und Temperaturprofilen zu erhalten, wodurch die gemessenen Spektren wegen der sich kreuzenden Strahlenbündel ein Raster und damit eine Einteilung des Mediums in Bereiche bilden, wobei zu jedem Bereich ein Satz von Parametern gehört, die zu einem Gesamtvektor aneinander gehängt werden, und analog die gemessenen Spektren zu einem Gesamtmeßvektor aneinander gehängt werden, und das so entstehende Least-Squares-Problem nach dem Global-Fit-Verfahren gelöst wird.

## Claims

**1.** A method for the quantitative analysis of gas volumes, more particularly the exhaust gases from combustion systems, such as aircraft engines (gas turbines), by means of emission or absorption spectrometry in the ultraviolet, visible and infrared spectral range, comprising the steps:

a) geometrically defining a reproducible adjustable observation plane oriented perpendicular to and shiftable along the longitudinal axis of a jet engine exhaust stream;
b) in a first series of measurements, measuring m spectra with the optical axis of a spectrometer always located in each observation plane, but shifted in parallel by a first distance from one measurement to the next, and
c) in a second series of measurements, measuring n spectra with the optical axis oriented this time perpendicular to the axis in step b) again located in the observation plane, but shifted in parallel by a second distance from one measurement to the next; whereby
d) arranging the optical axis in the observation plane results in two orthogonal sets of beam of rays in the (m

+ n) measurements which form a grid including *(m x n)* partial volumes, the size of which is given by the geometry (solid angle of the spectrometer, and the distance to the partial volume) and whereby
e) with the aid of the set of *(m + n)* measurements and depending on how the method is applied, each measurement yields the spectral transmission $T(\nu)$, where $\nu[cm^{-1}]$ represents the wave number, i.e. the inverse wavelength of the radiation, or respectively the spectral radiance $I(\nu)$, which is integrated over the total gas volume in the beam of rays of the spectrometer field of view.

**2.** A means for implementing the method as set forth in claim 1, more particularly for measuring the exhaust gases in the exhaust stream of aircraft engines (gas turbines) including a number (*m* + *n*) of optical detectors (25) each arranged and adjustable to the other in a plane located perpendicular to the longitudinal axis (210) of the exhaust stream so that the optical axes of the beams detected by the m detectors (25) each parallel to the other are oriented perpendicular to the axes of the beams detected by the n detectors (25) likewise each parallel to the other to form from the beams each located at right angles to the other a grid standing perpendicular to the axis (211) of the exhaust stream, **characterized by** a mounting fixture (24) encompassing the exhaust stream (22) and arranged in the plane located perpendicular to the longitudinal axis (210) of the exhaust stream and which is shiftable parallel to itself along the longitudinal axis (210) of the exhaust stream (22); fiber-optic bundles (26) corresponding in number to the number *(m + n)* optical means (25) coupled at one end to the detectors (25); an optical multiplexer (27) to the inputs of which the other end of the fiber-optic bundles is ported in each case, and a spectrometer (21) to which the optical multiplexer (27) is coupled.

**3.** The method as set forth in claim 1, wherein the finite aperture of a spectrometer field of view (FOV) is taken into consideration by a beam of rays of finite extent as an overlap of a number of lines of sight in the form of a convolution integral and
integrating by a Gauss-Legendre quadrature process is done with at least three lines of sight in taking into consideration the finite aperture through several beams of rays that are shifted in a parallel direction in the form of an analogous integration via the aperture.

**4.** The method as set forth in claim 1, **characterized in that** at least one spectrum is measured and determining therefrom via a least squares method a temperature and/or spatial density distribution of the exhaust gas components.

**5.** The method as set forth in claim 1, **characterized in that** several spectra are measured, which are analysed in the sense of a "global fit" in a least squares process, whereby the measurement vectors $g_s$ that correspond to the individual spectra are concatenated for $s=1, ..., S$ to a total vector $G=(g_1 ..., g_S)$ and the minimalization condition is applied to this vector.

**6.** The method as set forth in claim 4 or 5, **characterized in that** for improving modelling of unknown profiles parameterizing the source function via an analytical expression is undertaken, and, if analytically-describable additional information about profiles is available, then using measured radiance spectra to determine parameters of functional correlations simultaneously for all measurements with the aid of the Gaussian adjustment of observations including a least squares fit, by combining the required parameters into a vector and determining the vector with the aid of numeric algorithms including adjustment of observations.

**7.** The method as set forth in any of the claims 1 or 4 to 6, **characterized in that** to enhance modelling gas volumes of a substantially unknown structure discretization by expansion of a set of suitable selected functions is implemented by - in the single dimensional case of cylindrical symmetry - expanding the unknown profile in radial-dependent functions

$$f(r) = \sum_{j=1}^{n} x_j \Phi_j(r) .$$

and in the two-dimensional or three-dimensional case the unknown profile function is represented as the sum

$$f(\vec{r}) = \sum_{j=1}^{n} x_j \Phi_j(\vec{r})$$

where f(r) is the temperature profile or gas profile to be determined, Φj is a suitably selected set of functions (linear splines, "hat functions" or the Eigen-functions of the harmonic oscillator $\Phi_0(r) \sim \exp(-r^2)$, $\Phi_1(r) \sim r \exp(-r^2)$. ..), and $x_j$, j=1,...,n are the n unknown expansion coefficients determined by means of a least squares method, and where in the two-dimensional or three-dimensional case the functions depending on the two space coordinates of the space vector, $\vec{r}$ = *(x,y)* are selected, for example, as product functions Φ(x,y)= Φ(x) Φ(y) Φ *(x,y)*= Φ *(x)* Φ *(y)* so that

$$f(x,y) = \sum_{k,l} x_{kl}\, \phi_k(x)\, \phi_l(y)\,.$$

**8.** The method as set forth in any of the claims 1, 6 or 7, **characterized in that** for gas volumes of a largely unknown structure unknown profiles are expanded according to a suitably selected set of functions, and in the general case, in which a number of profiles need to be determined, each of these profiles is expanded and the vector x to be determined in the least squares method is given through the concatenation of the expansion coefficients of all profiles.

**9.** The method as set forth in claim 1, **characterized in that**, in cases in which no profile information is available the medium is observed from at least two directions in a plane with each sensing beam being located in one and the same plane to obtain spatial information on concentration or temperature profiles, resulting in the measured spectra forming a grid by the intersecting beams of rays and thus dividing the medium into ranges, a set of parameters belonging to each range being concatenated together into a total vector whilst analogously concatenating together the measured spectra into a total measured vector and solving the resulting least squares problem by the global fit method.

## Revendications

**1.** Procédé d'analyse quantitative de volumes de gaz, notamment de gaz d'échappement provenant de dispositifs de combustion, tels que des propulseurs d'avion (turbines à gaz), à l'aide d'une spectrométrie d'émission ou d'absorption dans la plage spectrale de l'ultraviolet, dans la plage spectrale visible et dans la plage spectrale de l'infrarouge, procédé selon lequel

a) on fixe un plan d'observation défini de façon géométrique et pouvant être déplacé de façon reproductible, qui est orienté respectivement perpendiculairement à l'axe longitudinal d'un jet de gaz d'échappement d'un propulseur et peut être déplacé le long de l'axe longitudinal du jet de gaz d'échappement,
b) dans une première série de mesure, on effectue un nombre m de mesures spectrales, l'axe optique d'un spectromètre étant situé en permanence dans le plan respectif d'observation, mais étant déplacé parallèlement respectivement d'une première section, d'une mesure à la suivante, et
c) dans une seconde série de mesures, on exécute n mesures, l'axe optique dirigé cette fois perpendiculairement à l'axe lors de l'étape b) étant situé à nouveau dans le plan d'observation, et étant décalé parallèlement respectivement d'une seconde section, d'une mesure à l'autre, selon lequel
d) en raison de la disposition de l'axe optique dans le plan d'observation il apparaît, pour les (n + m) mesures, deux ensembles orthogonaux de faisceaux de rayonnement, qui forment un réseau comportant (n x m) volumes de coupe, dont la taille est déterminée par la géométrie (angle solide du spectromètre, éloignement par rapport au volume de coupe), et selon lequel
e) à l'aide de l'ensemble de (n + m) mesures, chaque mesure détermine, en fonction du procédé utilisé, la transmission spectrale T (υ), υ[$cm^{-1}$] étant le nombre d'onde (inverse de la longueur d'onde du rayonnement), ou la densité de rayonnement spectrale I(υ), qui est intégrée sur l'ensemble du volume de gaz dans le faisceau

de rayonnement du champ d'observation du spectromètre.

2. Dispositif pour la mise en oeuvre du procédé selon la revendication 1, notamment pour la mesure de gaz d'échappement dans le jet de gaz d'échappement de propulseurs d'avion (turbines à gaz) comportant un nombre de (n + m) dispositifs de réception optique (25) qui sont disposés dans un plan perpendiculaire à l'axe longitudinal (210) du jet de gaz d'échappement (22) et sont ajustés entre eux de telle sorte que des axes optiques, qui sont orientés respectivement parallèlement entre eux, des rayons reçus par les m dispositifs de réception (25),sont orientés perpendiculairement aux axes, qui sont orientés également parallèlement entre eux, des rayons reçus par les n dispositifs de réception (25) de sorte qu'un réseau, qui s'étend perpendiculairement à l'axe (211) du jet de gaz d'échappement (22), est formé à partir des rayons qui sont disposés perpendiculairement entre eux,
**caractérisé par**
un dispositif de retenue (24), qui entoure le jet de gaz d'échappement (22) et est disposé dans le plan perpendiculaire à l'axe longitudinal (210) du jet de gaz d'échappement (22) et qui est déplaçable parallèlement à lui-même le long de l'axe longitudinal (210) du jet de gaz d'échappement (22);
un nombre, qui correspond au nombre (m + n) de dispositifs optiques (25), de faisceaux de fibres optiques (26), qui sont couplés par une extrémité aux dispositifs de réception (25) ;
un multiplexeur optique (27), jusqu'aux entrées duquel s'étend respectivement l'autre extrémité des faisceaux de fibres optiques, et
un spectromètre (21), auquel est couplé le multiplexeur optique (27).

3. Procédé selon la revendication 1, selon lequel l'angle d'ouverture final d'un système optique de spectromètre (FOV) est pris en compte par un faisceau de rayonnement ayant une étendue finie en tant que superposition de plusieurs lignes d'observation, sous la forme d'une intégrale de convolution, et l'intégration est exécutée au moyen du procédé en quadrature de Gauss-Legendre comportant au moins trois lignes d'observation, l'ouverture de réception finale du spectromètre étant atteinte par plusieurs faisceaux de rayonnement décalés parallèlement, sous la forme d'une intégration analogue sur l'ouverture.

4. Procédé selon la revendication 1, **caractérisé en ce qu'**au moins un spectre est mesuré et que la température et/ou la distribution de densité spatiale des constituants des gaz d'échappement sont déterminées au moyen d'un procédé des moindres carrés

5. Procédé selon la revendication 1, **caractérisé en ce qu'**on mesure plusieurs spectres et qu'on les évalue simultanément dans le sens d'un "ajustement global" dans un procédé des moindres carrés, par le fait qu'on réalise la concaténation des vecteurs de mesure ($g_s$) correspondant aux spectres individuels, pour s = 1, ..., S, pour former un vecteur global G = ($g_1$, ..., $g_s$) et qu'on applique la condition de minimalisation à ce vecteur.

6. Procédé selon la revendication 4 ou 5, **caractérisé en ce que** pour améliorer une modélisation de profils inconnus on exécute un paramétrage de la fonction source au moyen d'une expression analytique, et
dans tous les cas où des informations supplémentaires concernant les profils sont présentes et où ces informations peuvent être décrites de façon analytique, on détermine, à l'aide des spectres de densité de rayonnement mesurés, les paramètres des relations fonctionnelles et ce simultanément pour toutes les mesures, à l'aide du calcul de compensation gaussien (ajustement aux moindres carrés) par le fait qu'on réunit les paramètres à déterminer pour former un secteur et qu'on détermine le vecteur à l'aide d'algorithmes numériques (procédé de compensation).

7. Procédé selon l'une des revendications 1 ou 4 à 6, **caractérisé en ce que** pour améliorer une modélisation pour les volumes de gaz, ayant une structure dans une large mesure inconnue, on exécute une discrétisation par développement d'un ensemble de fonctions, qui doit être choisi de façon appropriée, par le fait que dans le cas unidimensionnel de la symétrie cylindrique, on développe le profil inconnu dans des fonctions de dépendance radiale

$$\int(r) = \sum_{j=1}^{n} x_j \Phi_j(r)$$

et dans le cas bidimensionnel ou tridimensionnel, on représente la fonction de profil inconnue sous la forme de la somme

$$f(\vec{r}) = \sum_{j-1}^{n} x_j \Phi_j (\vec{r}\,')$$

selon lequel f(r) représente le profil de température ou de gaz à déterminer, $\Phi_j$ représente un ensemble de fonctions devant être choisi de façon appropriée (fonction Splines linéaire, "hat-functions" ou les fonctions propres de l'oscillateur harmonique ($\Phi_0(r) \sim \exp(-r^2)$, $\Phi_1(r) \sim r \exp(-r^2)$ ...), et $x_j$ (avec j = 1, ..., n) désignant les n coefficients de développement inconnus, qui sont déterminés au moyen d'un procédé des moindres carrés,
et selon lequel dans le cas bidimensionnel ou tridimensionnel, les fonctions, qui dépendent des deux coordonnées spatiales du vecteur de lieu $\vec{r}$ = (x, y), sont choisies en tant que fonctions produits Φ(x,y) = Φ(x)Φ(y), de sorte que l'on a:

$$f(x,y) = \sum_{k,l} x_{kl} \phi_k(x) \phi_l(y) .$$

**8.** Procédé selon l'une des revendications 1, 6 ou 7, **caractérisé en ce que** pour des volumes de gaz ayant une structure dans une large mesure inconnue, on développe des profils inconnus selon un ensemble de fonctions, devant être choisi de façon appropriée, dans le cas général de plusieurs profils à déterminer, on développe chacun de ces profils, et on détermine le vecteur x, qui doit être déterminé selon le procédé des moindres carrés, par concaténation des coefficients de développement de tous les profils.

**9.** Procédé selon la revendication 1, **caractérisé en ce que** dans les cas, dans lesquels aucune information n'est présente concernant des profils, le milieu est observé à partir d'au moins deux directions dans un plan, et les faisceaux de rayonnement sont situés respectivement dans un même plan pour l'obtention d'informations spatiales concernant l'allure des profils de concentration et de température, ce qui a pour effet que les spectres mesurés forment, en raison des faisceaux de rayonnement qui se croisent, une trame et par conséquent une division du milieu en zones, et à chaque zone est associée un ensemble de paramètres, qui sont réunis les uns aux autres pour former un vecteur global, et de façon analogue les spectres mesurés sont réunis entre eux pour former un vecteur de mesure global, et le problème des moindres carrés, qui apparaît ainsi, est résolu selon le procédé d'ajustement global.

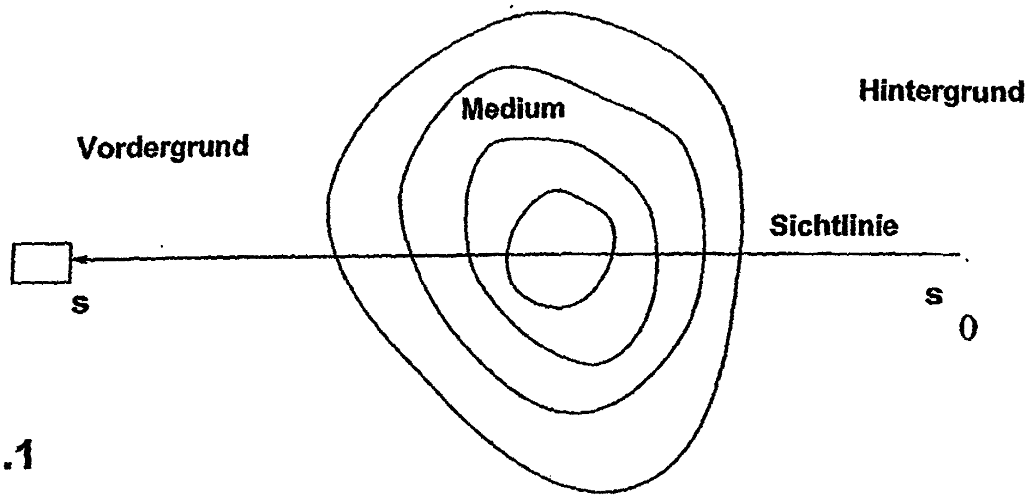


Fig.1

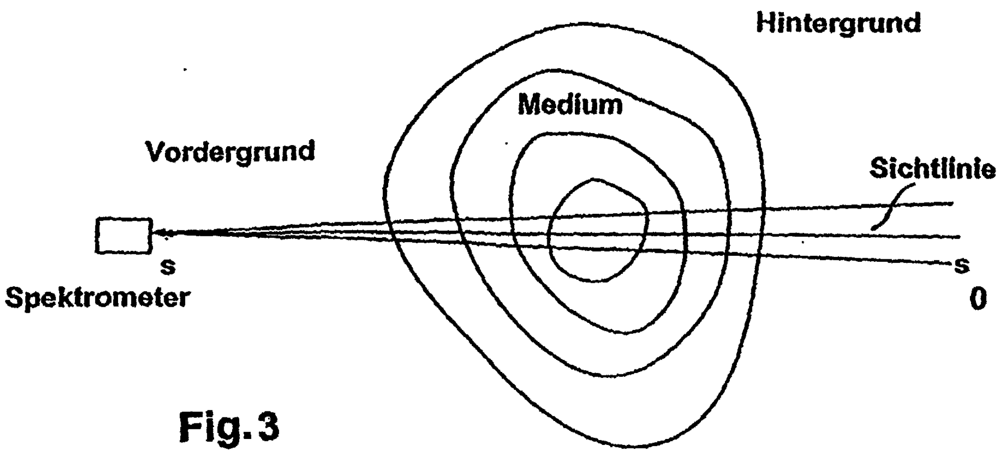


Fig. 3

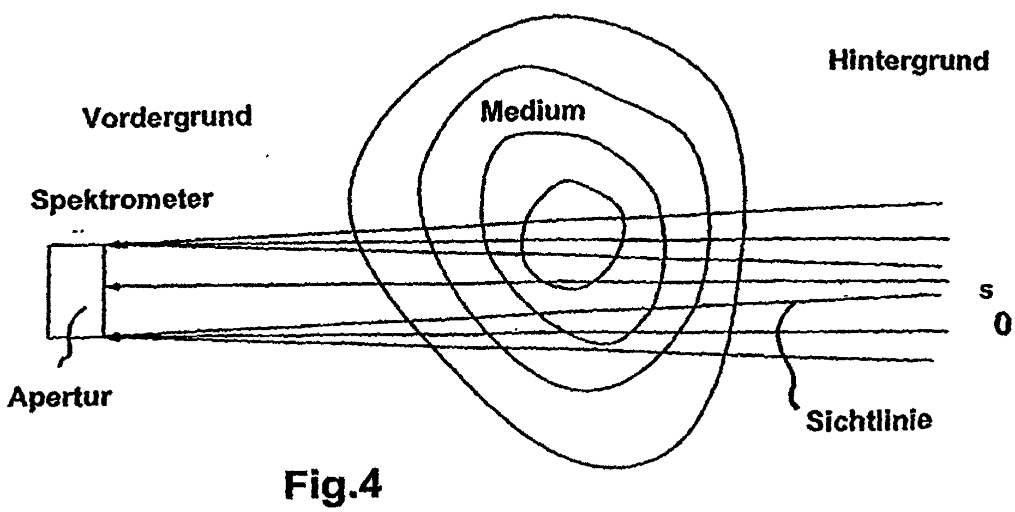


Fig.4

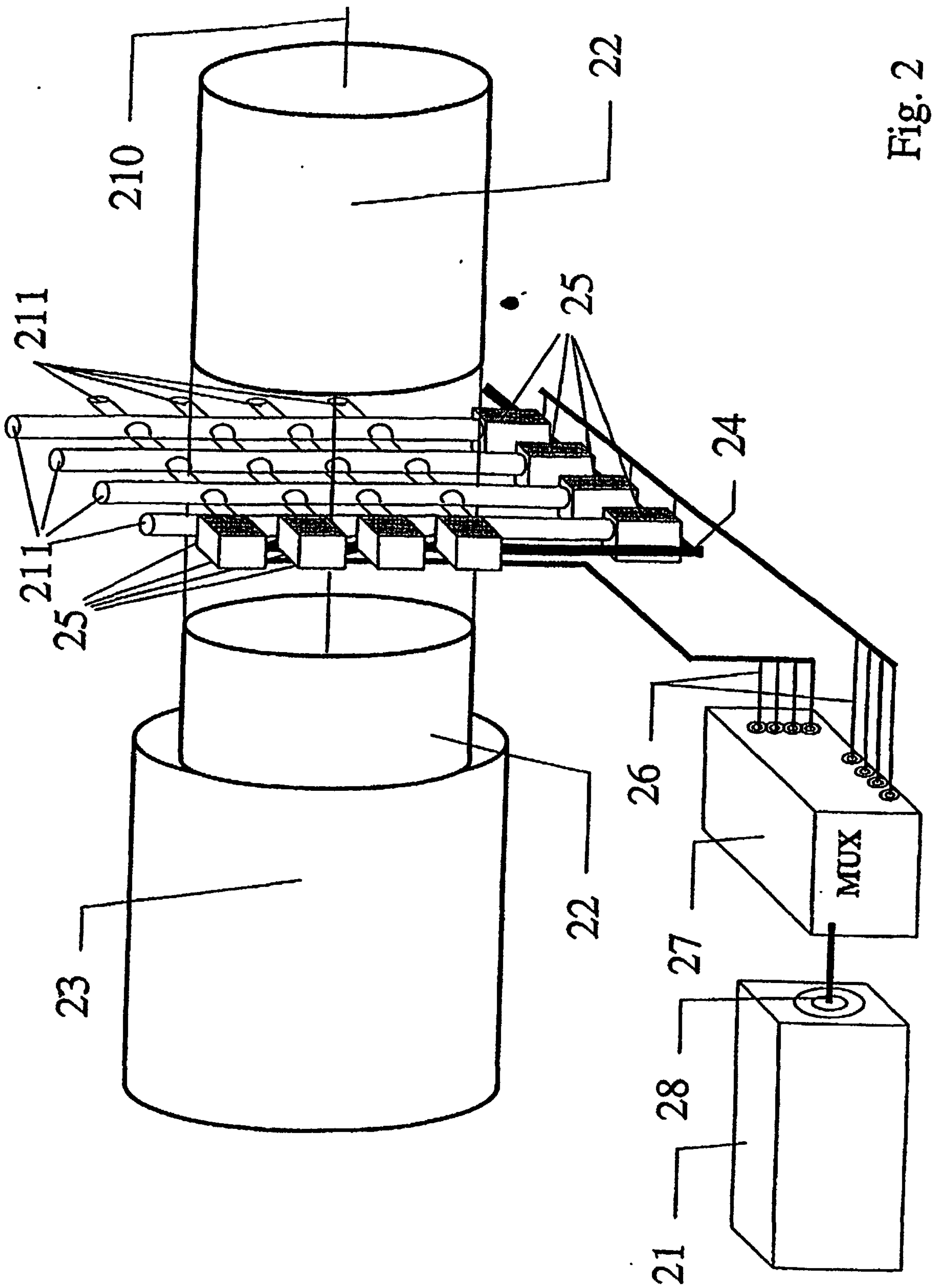


Fig. 2

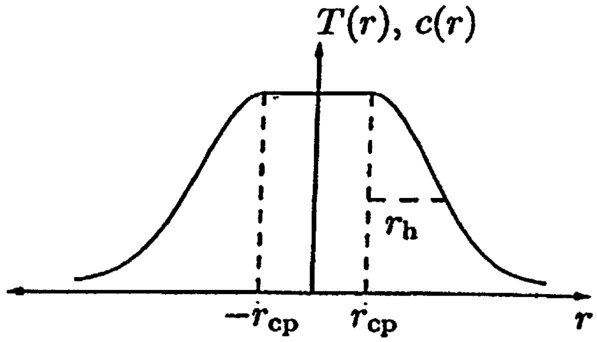


Fig.5

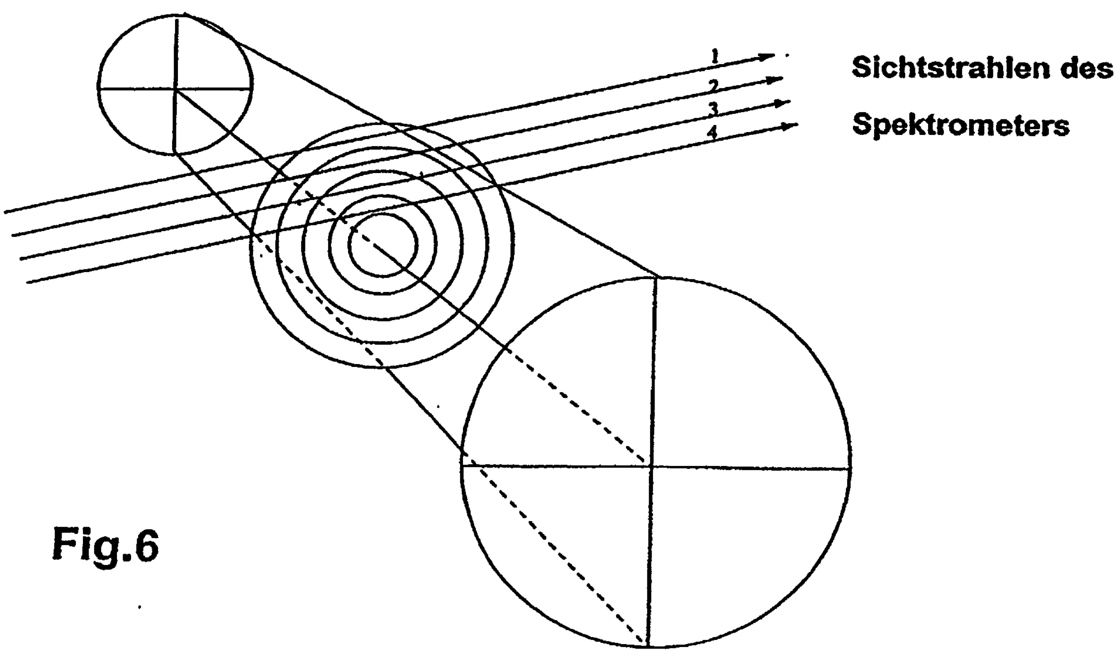


Fig.6

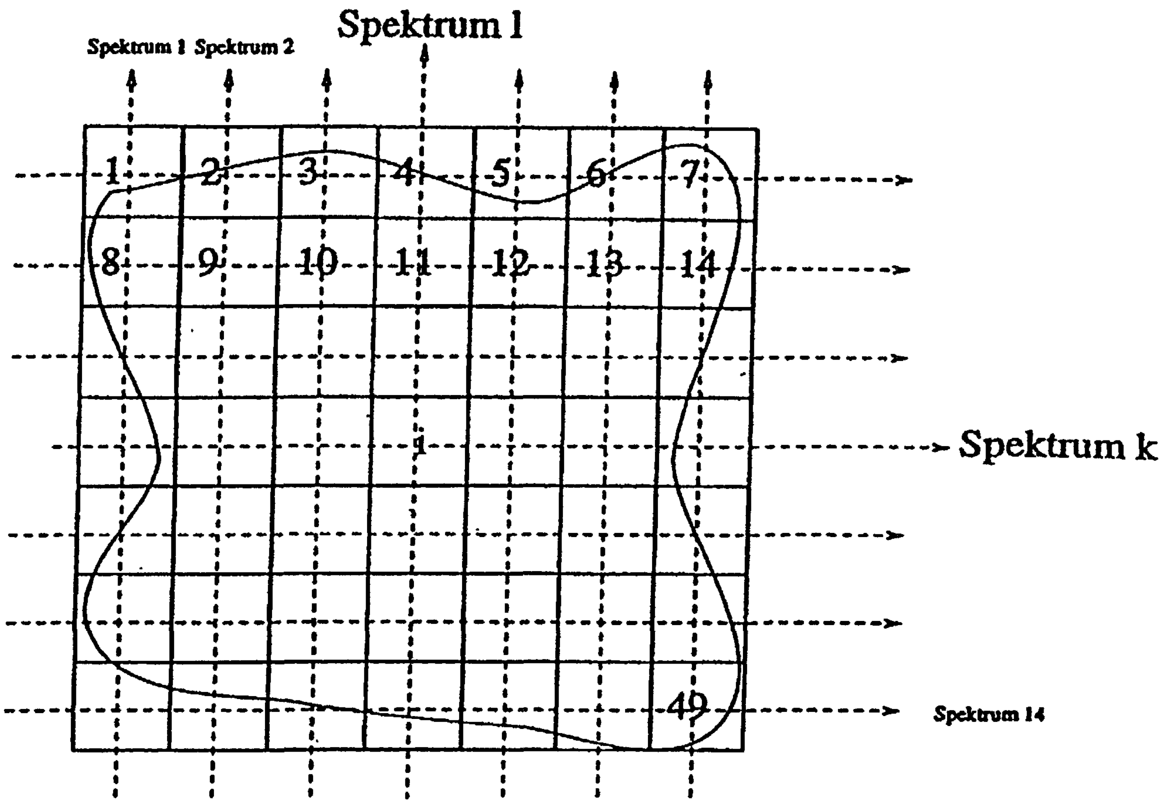
Spektrum 1 Spektrum 2
Spektrum l
1
2
3
4
5
6
7
8
9
10
11
12
13
14
i
Spektrum k
49
Spektrum 14

Fig.7